Europäisches Patentamt

European Patent Office

Office européen des brevets

(11) Veröffentlichungsnummer: **0 243 673**
**A2**

(12) **EUROPÄISCHE PATENTANMELDUNG**

(21) Anmeldenummer: 87104334.5

(51) Int. Cl.⁴: **B25J 11/00**

(22) Anmeldetag: 24.03.87

(30) Priorität: 28.04.86 DE 3614362

(43) Veröffentlichungstag der Anmeldung:
04.11.87 Patentblatt 87/45

(84) Benannte Vertragsstaaten:
DE ES FR IT SE

(71) Anmelder: **Siemens Aktiengesellschaft Berlin und München**
**Wittelsbacherplatz 2**
**D-8000 München 2(DE)**

(72) Erfinder: **Hartmann, Gunter, Dipl.-Ing.**
**Hohenwaldeckstrasse 2**
**D-8000 München 90(DE)**
Erfinder: **Swoboda, Ralf, Dipl.-Ing.**
**Neufriedenheimerstrasse 4**
**D-8000 München 70(DE)**
Erfinder: **Lang, Robert, Ing. grad.**
**Ringstrasse 49**
**D-8889 Syrgenstein(DE)**

(54) **Handhabungsgerät, insbesondere Industrieroboter, zur Schlauchmontage.**

(57) Alle Handling-und Fügeoperationen bei der Schlauchmontage werden von einem Handhabungsgerät, insbesondere Industrieroboter, ausgeführt, der mehrere Zweibacken-Greifer 2 an einem Revolvergrundkörper 1 aufweist. An dem Revolvergrundkörper sind parallel zur Drehachse Saugnäpfe zum Werkstück-Handling angeordnet. Die einzelnen Greifer sind abgeknickt am Grundkörper befestigt. Zusätzliche Fügehilfen verhindern ein Abknicken der Schläuche beim Aufschiebevorgang. Von den in einer Bereitstelleinheit in Rollen gelagerten Schläuchen wird jeweils "IR-seitig" die erforderliche Menge Schlauch abgeschnitten und in einer Vorbereitungsstation geweitet.

FIG 1

## Handhabungsgerät, insbesondere Industrieroboter, zur Schlauchmontage.

Die Erfindung betrifft die automatische Montage von Schläuchen auf Anschlußstutzen von Aggregaten, Verteilergruppen und ähnlichem mit Handhabungsgeräten, insbesondere Industrierobotern.

In vielen Fertigungen werden Schläuche - sogenannte biegeschlaffe Teile - manuell auf Stutzen von Aggregaten, Verteilergruppen und ähnliches aufgesetzt. Bei diesen Stutzen handelt es sich in der Regel um Kunststoff-Blasteile. Die für eine automatische Montage erforderlichen Schläuche sind geordnet nach Type und Größe in Magazinen gelagert oder sie werden "endlos" von der Rolle verarbeitet.

In der Zeitschrift für industrielle Fertigung 76 (1986) Nr. 1 ist auf den Seiten 8 bis 11 ein Artikel über die "Montage biegeschlaffer Teile mit Industrierobotern" abgedruckt. In diesem Aufsatz sind vorzugsweise die Grundlagen für die automatische Montage biegeschlaffer Teile erläutert. Abgesehen von der Darstellung mehrerer Greifbackenformen sind diesem Aufsatz aber keine konstruktiven Einzelheiten zu entnehmen.

Der Erfindung liegt die Aufgabe zugrunde, das Aufstecken von Wasser-und Luftschläuchen, zum Beispiel aus PVC oder PVC mit Textilarmierung, auf Wassereinläufe und Niveaugeber von Geschirrspülern zu automatisieren. Dabei soll vor allem bei der Bestückung von Aggregaten mit Schläuchen verschiedenen Durchmessers ein dauerndes Um rüsten des Handhabungsgerätes, insbesondere des Industrieroboters, vermieden werden.

Diese Aufgabe wird durch die in den Patentansprüchen aufgeführten Merkmale gelöst.

Der Vorteil der Erfindung liegt darin begründet, daß mit einem Handhabungsgerät, insbesondere Industrieroboter, nach der Erfindung Baugruppen, zum Beispiel für Geschirrspüler, bestehend aus Kunststoff-Blasteilen mit mehreren Schlauchanschlüssen vollautomatisch zusammengesetzt werden können. Außerdem ist ein vorbereitendes Ablängen von Schläuchen nicht erforderlich.

Die Erfindung wird anhand der Figuren erläutert. Es zeigen:

Figur 1 in der Draufsicht einen Revolvergreifer mit drei Greifern,

Figur 2 einen Schnitt II-II durch Figur 1,

Figur 3 Greifbacken in der Seiten-und Vorderansicht vorzugsweise zum Stecken dickwandiger Schläuche,

Figur 4 Greifbacken in der Seiten-und Vorderansicht vorzugsweise zum Stecken dünnwandiger Schläuche, und

Figur 5 eine Schlauchbereitstellvorrichtung.

In den Figuren sind an einem Revolvergrundkörper 1 zum Beispiel drei Greifpaare 2 angeordnet. Jedes Greifpaar ist für einen bestimmten Schlauchdurchmesser bzw. Typ ausgelegt. Am Revolvergrundkörper 1 sind auch Saugkörper 3 zum Handling des Werkstücks, im vorliegenden Fall des Blasteils (Wassereinlauf, Niveaugeber) vorgesehen. Im Ausführungsbeispiel erfolgt die Betätigung der Grei fer durch einen pneumatischen Zentralantrieb.

Um ein Wegknicken des Schlauches 4 beim Aufstecken auf die Werkstückstutzen zu verhindern sind in den Greifbacken zum Stecken dickwandiger Schläuche zwei federnde Führungsbolzen 5 vorgesehen. Mit 6 ist ein Blasteil angedeutet.

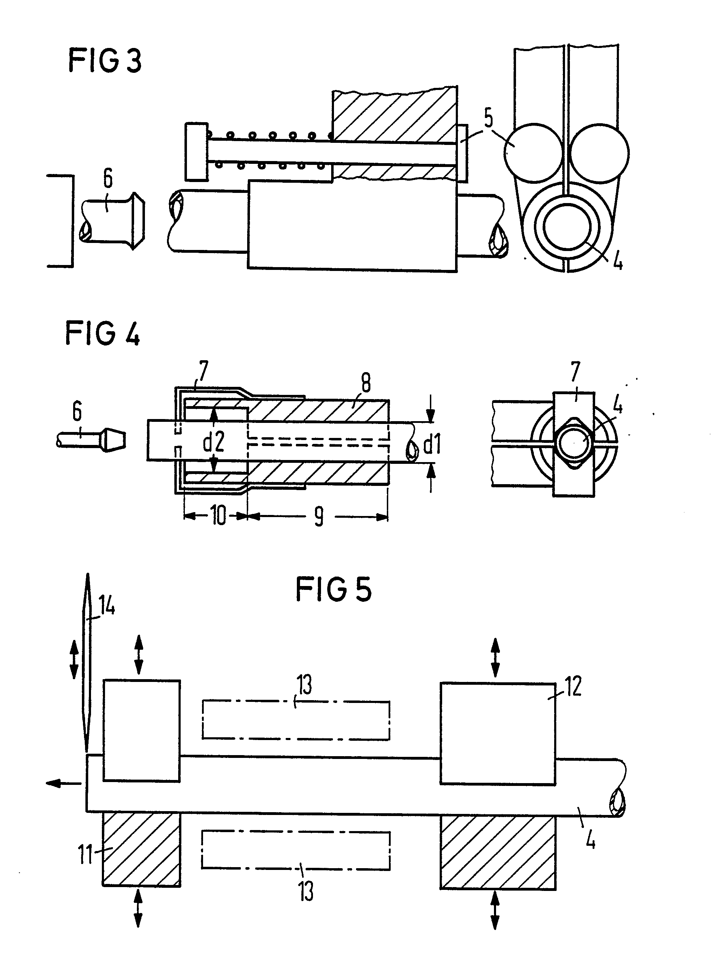

Nach der Darstellung in der Figur 4 wird der Schlauch 4 von zwei federnden Backen 7 zentriert. In dem Grundkörper 8 wird der Schlauch mit dem Durchmesser d1 im Bereich 9 geklemmt. Im Bereich 10 ist eine Führungshülse mit dem Durchmesser d2 angedeutet. Die Führungshülse verhindert ein Auslenken des Schlauches beim Aufschieben auf den Blasteilstutzen 6.

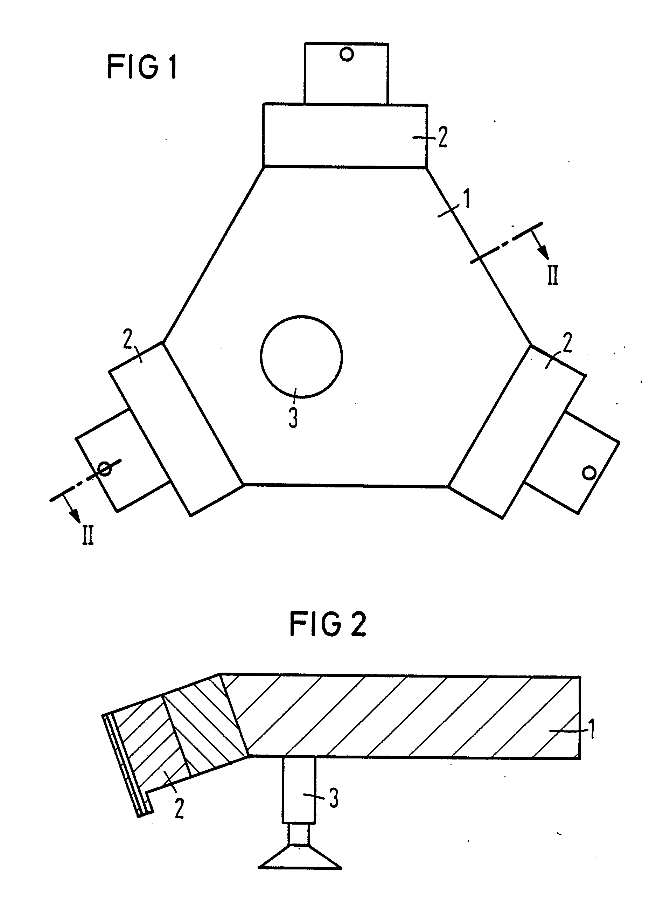

In der Figur 5 sind die wesentlichen Komponenten der Schlauchbereitstellvorrichtung dargestellt. Der Schlauch 4 wird zwischen vorderen 11 und hinteren Klemmbacken 12 in definierter Lage für die Übernahme durch den Greifer gehalten. Mit 13 sind in dieser Figur die Greiferbacken angedeutet. Die abgeknickte Anordnung der Greiferbacken (Figur 2) ermöglicht eine bessere Zugänglichkeit beim Abholen des Schlauches.

Nach dem Abziehen des Schlauches auf Länge durch das Handhabungsgerät, bzw. Industrieroboter, erfolgt das Abschneiden des Schlauches 4 durch ein Messer 14. Für jeden Schlauchdurchmesser bzw. Typ ist eine derartige Schlauchbereitstellvorrichtung vorgesehen.

Der Arbeitsablauf in einer Schlauchmontagezelle mit Industrieroboter kann am Beispiel der Montage der Baugruppe für den Wassereinlauf von Geschirrspülern folgendermaßen vor sich gehen:

Das Handhabungsgerät, im folgenden immer als IR bezeichnet, entnimmt zum Beispiel mit einem Sauggreifer ein Kunststoff-Blasteil einem nicht dargestellten Stapelmagazin. Die Kunststoff-Blasteile sind typenmäßig geordnet in Stapelmagazinen abgelegt. Der IR legt dieses Blasteil in einer Vorrichtung ab, wo das Teil zum Beispiel durch pneumatische Spanner für die weiteren Arbeitsgänge fixiert wird. Danach wird mittels einer nicht dargestellten Zuführeinheit die Halteklammer über dem entsprechenden Stutzen des Blasteils positioniert. Parallel hierzu fährt der IR zur Bereitstelleinheit (Figur 5) für den ersten Schlauch und übernimmt das Schlauchende an der aus den Klemmbacken 11 und 12 bestehenden Spannvorrichtung mit seinem Greifer. Da unterschiedliche Schläuche zu verarbeiten sind, ist je Schlauchtyp eine Spanneinheit und am IR ein entsprechender Greifer vorgesehen. Diese n-Greifer, jeweils zum Beispiel pneumatische Zweibacken-Greifer, sind in einem Revolver 1 zusammengefaßt und werden beispielsweise durch die 6. Achse des IR (Flansch-Drehachse) in die jeweilige Arbeitsposition gedreht.

Nach Lösen der Spanner der Bereitstelleinheit zieht der IR die gewünschte Schlauchlänge von der Rolle ab (Figur 5). Danach wird der Schlauch wieder gespannt und "IR-seitig" abgeschnitten. Nun führt der IR den "losen" Schlauch, dessen aufzusteckendes Ende im IR-Greifer fixiert ist, zu einer Vorbereitungsstation, in der das aufzusteckende Ende aufgeweitet (zum Beispiel kalter Kegeldorn, beheizter Kegeldorn, Spreizdorn) wird und schiebt das Ende dann auf den entsprechenden Stutzen des Blasteils. Der Vorgang wird so oft wiederholt, bis alle Schläuche gesteckt sind. Danach entnimmt der IR, wiederum mit seinem Sauggreifer, das Blasteil aus der nicht dargestellten Vorrichtung und legt es in einem der Magazine für fertige Baugruppen ab.

Durch Verwendung eines Schmiermittels, das zum Beispiel in der Schlauchbereitstelleinheit oder in der Vorberei tungsstation in die "Steckzone" des Schlauchs eingebracht wird, kann das Aufstecken des Schlauches auf den entsprechenden Stutzen des Blasteils erleichtert werden.

Wie die Figur 1 zeigt, sind die einzelnen zwei Backen-Greifer sternförmig zu einem Revolver-Greifer zusammengefaßt. Je nach Konstruktion können die Einzelgreifer direkt von einem Stellglied, zum Beispiel Pneumatikzylinder, betätigt werden oder gemeinsam von einem Zentralantrieb, da jeweils nur ein Greifer in Arbeitsposition ist. Die Greifzone der einzelnen Greifer muß dem zu steckenden Schlauch (Durchmesser, Steckkräfte, Führung) angepaßt sein. Einige Ausführungsformen zeigen die Figuren 3 und 4. In der Figur 3 sind zwei federnde Führungsbolzen 5 vorgesehen, die ein Ausknicken des Schlauches beim Stecken verhindern. Für dünne Schläuche (Figur 4) wird das Ausknicken durch eine in die Backen eingearbeitete Führungshülse mit dem Durchmesser d2 verhindert. Um den Schlauch zum Vorbereiten und dann zum Aufstecken zu zentrieren sind zwei federnde Zentrierstücke 7 eingebaut.

Da die Stutzendurchmesser größer als die Schlauchinnendurchmesser sind, muß zur Erleichterung des Aufsteckens das zu steckende Schlauchende aufgeweitet werden. Je nach Schlauchkonfiguration (Material, Innendurchmesser, Wandstärke) sind verschiedene Einheiten erforderlich. Im einfachsten Fall genügt es, daß der IR das zu steckende Schlauchende auf einen kalten Kegeldorn aufschiebt. Wird der Dorn beheizt, wird das Aufweiten verbessert. Bei großen Durchmesserunterschieden zwischen Schlauchinnendurchmesser und Stutzenaußendurchmesser muß das zu steckende Schlauchende durch einen Spreizdorn, zum Beispiel drei zentrisch auseinanderfahrbare Backen, aufgeweitet werden. Hier empfiehlt es sich, mit einem vorgewärmten Schlauchende zu arbeiten. Das Vorwärmen kann zum Beispiel in einem Wasserbad an der Schlauchbereitstelleinheit erfolgen.

Das zu steckende Schlauchende ist in der Spannvorrichtung (Figur 5) derart fixiert, daß der Schlauch zwischen den Fixierungen in definierter Lage vom IR-Greifer übernommen werden kann. Nach dem Abziehen von einer nicht dargestellten Rolle wird der Schlauch in dieser Spanneinheit für den nächsten Zyklus erneut fixiert und ein Schnittwerkzeug 14 schneidet den abgezogenen Schlauch unmittelbar "IR-seitig" vor der Fixierung ab.

In der Vorrichtung (Spanneinheit) wird auch das Blasteil zentriert und fixiert. Zum Toleranzausgleich und zur Führung des zu steckenden Schlauchendes sind je Stutzen nicht dargestellte Führungstrichter vorgesehen. Diese sind so geteilt, daß das Oberteil mit dem Öffnen der Spanneinheit ausgefahren wird, so daß die Schläuche zur Entnahme des Blasteils freiliegen.

## Ansprüche

1. Handhabungsgerät, vorzugsweise Industrieroboter, zur automatischen Montage von Schläuchen auf Anschlußstutzen von Aggregaten, Verteilergruppen und ähnlichem, **dadurch gekennzeichnet,** daß drei oder mehrere Zweibacken-Greifer (2) für verschiedene Schlauchdurchmesser an einem Revolver-Grundkörper (1) angeordnet sind, die jeweils von einem Stellglied, zum Beispiel Pneumatikzylinder, oder gemeinsam von einem Zentralantrieb zu betätigen sind.

2. Handhabungsgerät nach Anspruch 1, **dadurch gekennzeichnet,** daß die Greifer (2) abgeknickt am Grundkörper (1) angeordnet sind, um in einer Schlauchbereitstellvorrichtung (Figur 5) die Schläuche (4) übernehmen und auf die entsprechende Länge abziehen zu können.

3. Handhabungsgerät nach den Ansprüchen 1 und 2, **dadurch gekennzeichnet,,** daß an dem Revolverkörper (1) parallel zur Drehachse Saugnäpfe (3) zum Werkstück-Handling angeordnet sind.

4. Handhabungsgerät nach den Ansprüchen 1 bis 3, **dadurch gekennzeichnet,** daß in Verbindung mit den Greifbacken (2) zusätzliche Fügehilfen (Figur 3, 4) vorgesehen sind.

5. Handhabungsgerät nach Anspruch 4, **dadurch gekennzeichnet** daß zwei federnde Führungsbolzen (5) als zusätzliche Fügehilfen dienen.

6. Handhabungsgerät nach Anspruch 4, **dadurch gekennzeichnet,** daß in die Greifbacken Führungshülsen (10) eingearbeitet sind.

7. Handhabungsgerät nach Anspruch 4, **dadurch gekennzeichnet,** daß an den Greiferbacken je ein federnder Backen (7) zur Schlauchzentrierung angebracht ist.

8. Handhabungsgerät nach den Ansprüchen 1 bis 4, **dadurch gekennzeichnet,** daß in einer Vorbereitungsstation Mittel (kalter Kegeldorn, beheizter Kegeldorn, Spreizdorn) zum Weiten der Schläuche vorgesehen sind.

FIG 1

2

1

2

3

2

II

II

FIG 2

1

2

3

FIG 3

FIG 4

FIG 5